# EUROPEAN PATENT SPECIFICATION

(11) **EP 3 351 607 B1**
(45) Date of publication and mention of the grant of the patent: **14.07.2021**
(21) Application number: 18150217.0
(22) Date of filing: 03.01.2018
(51) Int. Cl.: C09J 5/06, C09J 7/35, A41D 27/24, A41D 27/08

(54) **HOT-TRANSFER ADHESIVE ELEMENTS APPLIED BY THERMAL TRANSFER PROCESS FOR GLUING AND SEALING OF TEXTILE MATERIALS**
HEISSKLEBEELEMENTE, DIE DURCH THERMISCHE ÜBERTRAGUNGVERFAHREN ZUM KLEBEN UND ABDICHTEN VON TEXTILMATERIALIEN ANGEWANDT WERDEN
ÉLÉMENTS DE THERMOCOLLAGE APPLIQUÉS PAR UN PROCÉDÉ DE TRANSFERT THERMIQUE POUR COLLAGE ET SCELLAGE DE MATIÈRES TEXTILES

(30) Priority: 20.01.2017 PT 109869
(43) Date of publication of application: 25.07.2018
(73) Proprietor: Heliotextil-Etiquetas E Passamanarias S.A., 3701-914 São João da Madeira (PT)
(72) Inventor: BULHOSA DE AGUIAR PACHECO, JOSÉ MIGUEL, 3700 SÃO JOÃO DA MADEIRA (PT)
(74) Representative: Pereira da Cruz, Joao

(56) References cited:
- EP-A1- 1 486 323
- WO-A1-2007/122661
- JP-A- 2008 081 724
- US-A- 5 716 687
- US-A1- 2011 168 319
- US-A1- 2015 125 650

## Description

### Technical field and background of the invention

The present invention relates to hot-transfer adhesive elements for gluing and sealing textile materials, which promote the elimination of seams, or simply the sealing, waterproofing or reinforcement of textile products. The elements used in the present invention are fabricated based on multilayer printing technology of different materials by screen printing, wherein the recording of the print between layers is preserved. These elements are also known simply as "transfers" in the Anglo-Saxon language.

The present invention allows the possibility of these elements being fully customizable in shape and appearance, depending on the final application. Another innovative aspect is that the intermediate step of cutting and peeling that exists in actually known products for gluing and sealing is no longer necessary. In order to achieve this objective, the hot-transfer adhesive elements can be manufactured according to two distinct structures, one directed to glue fabrics or other materials, and the other directed to seal joints or to finish and reinforce the ends, in the same materials. The alignment technique is also innovative, based on the inclusion of zones with non-permanent cold adhesive and facilitating the final application process.

### State of the art of the invention

Nowadays, the existing gluing and sealing solutions are based on tapes or films of different widths, produced in large scale by industrial processes that do not allow the customization of their shape, wherein the shape/geometry of the currently existing products is obtained by an intermediate peeling processes with unavoidable waste of material, time and energy, since it superficially cuts the film in the required shape, removing the excesses by manual peeling. In the address http://www.framis.it/site/tapes-films, there are examples of tapes with the hot-transfer adhesive and sealing tapes purchased in large quantities. These tapes are cut-to-measure and used to perform the gluing. The present invention can be customized, the printing is executed through screen printing in planes, the adhesive film can be executed with the desired shape, pocket, clasp, etc., as well as the various aesthetic patterns can be applied.

From the state of the art relevant for understanding the technical solution provided from the present invention, the following are highlighted:
JP2008081724 discloses a method of integrally joining end portions of clothes such as a wetsuit and the like by using a joining tape having a hot-melt adhesive layer, enabling the tape to perform simply structured temporary joining with ease. The tape joins end portions of clothes to each other, covering both the end portions. The tape comprising the hot-melt adhesive layer, has an adhesive layer on the surface of the first layer, so as to temporarily join the end portions of both clothes to each other.
US5716687 discloses a fusible adhesive sheet including a heat-sensitive substrate having a geometrical configuration of intersecting diagonal lines with diamond-shaped voids between the lines. A lattice of pressure-sensitive adhesive is positioned on the substrate and has intersecting diagonal lines with diamond-shaped voids in between the lines in a pattern different from that for the substrate.
WO2007122661 discloses a method for integrally joining two or more pieces of fabric when manufacturing items such as items of clothing. The invention further relates to items of clothing made by means of said method for joining two or more pieces of fabric.
US2015125650 discloses a process for the production of a textile product including placing a flat motif template on a textile substrate, sewing the motif template onto the textile substrate in such a way that a perforation defining a desired motif in the motif template is produced, removing the part of the motif template, that is outside the motif defined by the perforation, and permanently fixing the remaining part, having the motif, of the motif template to the textile substrate.
EP1486323 discloses a high-performance soft-hand laminated fabric having a structure where a temporary adhesive layer is used to laminate a front-surface fabric on one side of a durable film, and a permanent adhesive layer is used to laminate a rear-surface fabric on the remaining side of this durable film.

Current solutions are not feasible to customize the appearance for small amounts. On the other hand, the concept of linear length is not appropriate in the present invention because, unlike tape-based techniques, it is possible to make the gluing and sealing elements in the exact shape of the final application, for example pockets and apertures for clasps, thus avoiding wasting material. Another innovative aspect is the inclusion of zones of non-permanent cold adhesive that help the alignment and application of the hot-transfer adhesive elements.

Therefore, customized solutions in shape and appearance that allow the gluing and sealing between fabrics using a transfer process are not known in the state of the art. Only its application for stamping objects on fabrics or other compatible surfaces is known.

The present invention has the following advantages over the prior art:
- Allows the full customization of shape of the hot-transfer adhesive objects;
- Allows the full customization of hot-transfer adhesive elements, in terms of appearance, colors, drawings and other aesthetic elements that promote their visibility;
- It is feasible to produce small quantities industrially, exceeding 10 units;
- The need for the intermediate cut-to-measure process and the necessary peeling in the current products is eliminated because the gluing and/or sealing elements are customized to the final shape;
- Environmentally friendly solution because it avoids waste of material and energy in intermediate transformation steps;
- Includes areas of non-permanent adhesive that help the alignment and application of the hot-transfer adhesive elements;
- Bonding of fabrics avoiding seams;
- Sealing and waterproofing of bonding between fabrics, with or without seam;
- Finishing fabric ends, making seams and sheaths unnecessary;
- Construction of intermediate fittings, pockets, specific compartments applicable either in the making or in later stages, for example in the customization of textile products.

In fact, it is possible to carry out the gluing or sealing separately or sequentially, provided that each process is done with the hot-transfer adhesive element having the specific technical characteristics for gluing and/or sealing.

### Brief description of the Figures

### Indication of reference numbers

(1) Flexible film doped with a substance which promotes the release of the hot-transfer adhesive element during the application process;
(2) One or more layers of flexible paint hiding the adhesive layer and containing the object (4);
(3) Flexible and elastic adhesive layer with a controlled thickness, which will bind the hot-transfer adhesive element to the fabric or material where it is applied;
(4) Object - Drawing, message, illustration or another element for improving visibility;
(5) Cold carrier adhesive to help the application process, which temporarily fixes the film with the hot-transfer adhesive element in the area where it is intended to be applied;
(6) Fabrics to be glued and sealed;
(7) Free space for placing objects;
(8) Hot-transfer adhesive element already applied bonding the two fabrics.

Figure 1 - representation of the structure of a hot-transfer adhesive element that allows sealing and reinforcing of joints or ends of fabrics, wherein this hot-transfer adhesive element comprises one or more flexible paint layers (2) creating the aesthetic and visual elements (4), on the film (1), on which a flexible adhesive layer (3) having hot-melt characteristics, i.e. thermoplastic adhesive, is printed, which will promote the bonding to the final surface when submitted to the appropriated pressure and temperature for that purpose, thus obtaining a layer with controlled thickness.
Figure 2 - representation of the structure of a hot-transfer adhesive element designed for the gluing step, consisting of an adhesive layer (3) printed with controlled thickness on the film (1).
Figure 3 - schematic representation of the gluing and sealing process of the two fabrics, wherein the fabrics are glued with the hot-transfer adhesive elements shown in Figure 2, and are then sealed with the sealing elements shown in Figure 1.

### Detailed description of the invention

The present invention relates to hot-transfer adhesive elements for sealing and gluing of fabrics or other products. These elements are produced by screen printing process and are customizable in terms of shape and appearance. The printing process ensures a correct recording in order to keep the various layers of materials properly aligned. The elements are transferred to the final surface by hot pressing.

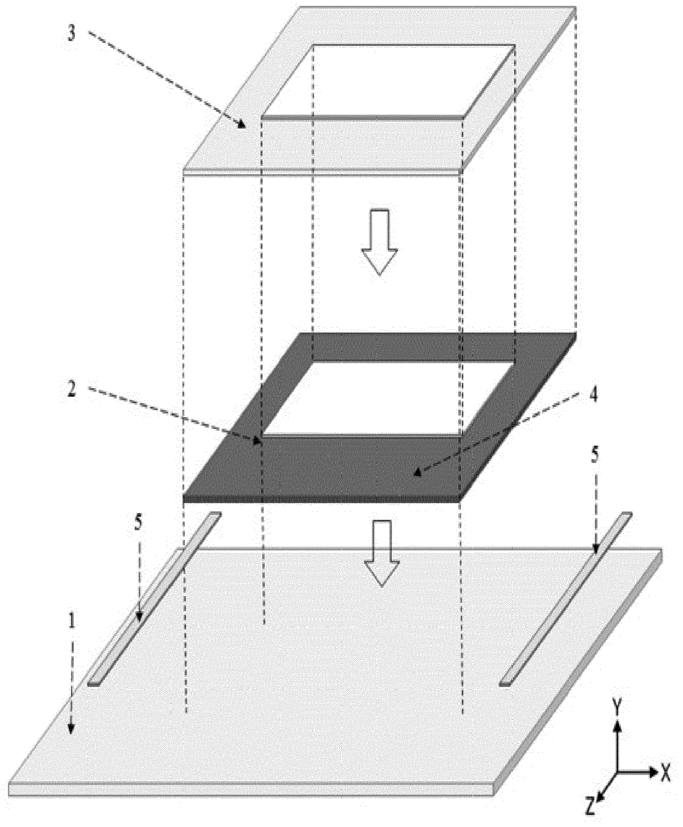

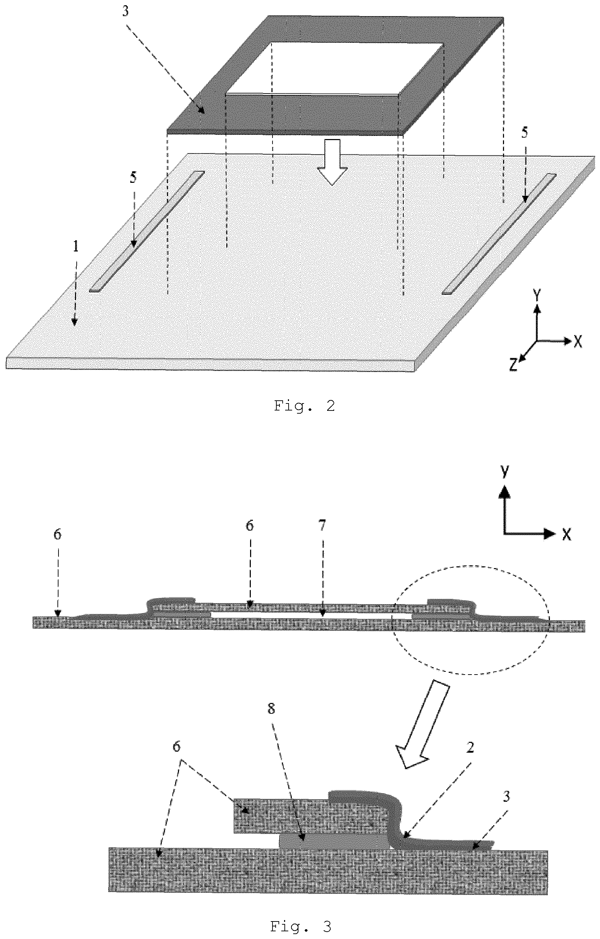

From the present invention, two element variants with specific structures are shown, one suitable for gluing, represented in Figure 2, and the other suitable for sealing/reinforcing, represented in Figure 1.

The hot-transfer adhesive elements intended to seal/reinforce have their structure represented in Figure 1, which consist of a film (1) with one or more layers of flexible paints printed on it and comprising the object (4), wherein the film may consist of paper, polyester or the like. A layer of adhesive/glue is printed on the layers of flexible paints. The thicknesses of the paint layers (2) and the adhesive/glue layer (3) have been reinforced, wherein the sum of the thickness of the paint layers (2) can range from 100µm to 150 µm and the thickness of the adhesive layer (3) can range from 80 µm to 200 µm. These elements are printed according to the shape and the aesthetic elements defined by the end user.

The hot-transfer adhesive elements intended for gluing surfaces have their structure represented in Fig. 2, which consist of a film (1) with an adhesive/glue layer printed on it. The thickness of the adhesive layer (3) is reinforced and can range from 80µm to 200µm. These elements are printed according to the shape defined by the end user.

The fact that, according to the description of the two types of elements, this thickness is controlled between the indicated values has the function of ensuring the strength to stress and abrasion of the hot-transfer adhesive elements when used in the final part.

It is still a feature of the present invention that the adhesive/glue layer (3) is a flexible elastic adhesive having hot-melt characteristics, i.e. thermoplastic adhesive, which will bond to the final surface when submitted to the appropriate pressure and temperature for this purpose.

Additionally, the hot-transfer adhesive elements, object of the present invention, have in their constitution, more particularly printed on the film (1), adhesive areas in their limits in order to help their application on the final surface, which in this application are designated as carrier adhesives (5).

In turn, the carrier adhesive (5) placed in the limits of the film (1) is a cold-type adhesive, i.e., adhesives having viscous texture that promotes the temporary adhesion between the hot-transfer adhesive element, before being transferred, and the surface, so that it does not move during the pressing process. In addition, the carrier adhesive (5) has the characteristic that it does not get into the surface, nor soiling it when the hot pressing is carried out.

The process of applying the hot-transfer adhesive elements starts with the alignment, which in the present invention is facilitated by the inclusion of areas with cold adhesive (5) only as temporary fixing means prior to the application of the hot-transfer adhesive element, i.e., between the film (1) of the element and the final surface, but does not get into the final surface after application, remaining in the film (1).

It should be noted that the hot-transfer adhesive element is transferred to the desired surface, for example textile, using a hot pressing process, the film (1) being released thereafter. The transfer process is performed according to defined parameters, wherein these parameters will be specified for each application in particular or type of hot-transfer adhesive element, and preferably are:
i. Temperature: 120°C to 180 °C;
ii. Pressure: 2 bar to 6 bar (0.2 MPa to 0.6 MPa);
iii. Time: 8 s to 30 s.

Given the fact that the present invention has the aforementioned technical characteristics and that the paint layers (2) and adhesive layers (3) have the defined thicknesses, the sealing of fabrics is allowed, being particularly interesting that this sealing is carried out in the joints or ends of the same since, in addition of reinforcing the ends of the joint between fabrics it also promotes the elimination of seams because they are fixed to each other without the necessity of being fixed by other means. For example, it allows the finishing/reinforcement of fabric ends in pockets, sheaths, eyelets. The present invention also allows the reinforcement and finishing of various zones of clothes, and additionally allows decorating the part to be sealed and gluing aesthetic elements or patterns on the same, thereby interfering in style and improving the user visibility and identification.

The object (4) and the paint layers (2) can be manufactured using several drawings, shapes and color combinations. For example, an image, which will be the front part of the element when applied, will hide and protect the adhesive layer as well as the end or joint of fabrics.

Additionally, this sealing process should comprise the steps described below, and may take place separately to the gluing process, or sequentially thereto.

The sealing process consists in adjusting the appropriate hot-transfer adhesive element, which has the paint layers (2), with the joining zone between the two fabrics, as exemplified in Fig. 3, and then apply the hot press preferably according to the parameters of temperature, pressure and time indicated in the subsection dedicated to transference process. The film (1) is removed in order to finish the process.

The hot-transfer adhesive elements of the present invention also allow gluing fabrics in a manner not known in the state of the art according to a variant thereof as shown in Fig. 2, since the fabrics are glued with customized elements and thereafter their ends are also reinforced, starting from the sealing process described herein.

In fact, by removing the paint layer (2) and consequently the object (4), the hot-transfer adhesive element allows the gluing between two fabrics, since it has its adhesive layer (3) reinforced.

This embodiment of the present invention allows gluing fabrics, if this process includes the following steps:
1. Transferring the element to a first fabric through a hot press, with certain pressure and temperature parameters and during a period of time which may vary depending on the substrate or fabric type. These parameters will be specified for each application or element type in particular;
2. Removing the film (1), wherein the release of the substance from which it is doped takes place;
3. Application of the second fabric to be glued;
4. Alignment of the second fabric;
5. Reapply the hot press, with controlled temperature, pressure and time, in order to bond the two fabrics.

Thus, it must be clarified that the present invention relates to hot-transfer adhesive elements, comprising:
- Flexible film (1) doped with a substance which promotes the release of the hot-transfer adhesive element during the application process or the release of at least one object (4) during its application;
- flexible and elastic adhesive layer/glue layer (3) with a thickness ranging from 80 µm to 200 µm;
- Carrier adhesive (5), which is a cold adhesive positioned on the edges of the film (1),
wherein the hot-transfer adhesive element further comprises at least one flexible paint layer (2) having a thickness ranging from 100 µm to 150 µm, on which the adhesive layer (3) is printed, and wherein said flexible paint layer (2) is hiding the adhesive layer (3) and containing the object (4).

This preferred embodiment of the present invention allows the gluing of fabrics, if this process includes the following steps:
1. Transferring the element to a first fabric through a hot press, with certain pressure and temperature parameters and during a period of time which may vary depending on the substrate or fabric type. These parameters will be specified for each application or element type in particular. These parameters are preferably:
   i. Temperature: 120 °C to 180 °C;
   ii. Pressure: 2 bar to 6 bar (0.2 MPa to 0.6 MPa);
   iii. Time: 8 s to 30 s;
2. Removing the film (1), wherein the release of the substance from which it is doped takes place;
3. Application of the second fabric to be glued;
4. Alignment of the second fabric;
5. Reapply the hot press, with controlled temperature, pressure and time, in order to bond the two fabrics. Preferably with the values described in step 1.

The alignment step is generally made manually, although it can also be performed automatically using machinery for that purpose.

In a preferred embodiment, the present invention comprises:
- Object (4);
- At least a paint layer (2) with a thickness ranging from 100 µm to 150 µm;
- Substance which promotes the release of the object (4) during its application, in the film (1).

With this preferred embodiment of the present invention it is possible stamping objects (4) on fabrics, although, due to the thickness of the paint layer (2) together with the thickness of the adhesive layer (3), the present invention in this preferred embodiment allows the sealing of fabrics, specifically at their ends, promoting its reinforcement and elimination of seams.

Additionally, this sealing process should comprise the steps described below, and may take place separately to the gluing process, or sequentially thereto.

The sealing process consists in adjusting the hot-transfer adhesive element, which has the paint layers (2), with the joining zone between the two fabrics, as exemplified in Fig. 3, and then apply the hot press parameterized according to the parameters of temperature, pressure and time indicated in the gluing process. The film (1) is removed in order to finish the process.

The object (4) and the paint layers (2) can be manufactured using several color combinations and aesthetic elements, namely reflective and/or fluorescent thus promoting their visibility. For example, an image, which will be the front part of the hot-transfer adhesive element when applied, will hide and protect the adhesive layer, as well as the end or joint of fabrics.

It should be noted that the sealing can occur on both sides of the fabric and be conjugated with special cutting processes, such as the laser cut, enabling specific openings to be created after sealing the two fabrics. The adhesive/glue layer (3) protects the fabric from fraying or tearing, and the image elegantly hides this end or aperture.

As will be apparent to one skilled in the art, the present invention should not be limited to the embodiments described herein, and a number of changes which remain within the scope of the present invention are possible.

Obviously, the preferred embodiments shown above are combinable, in the different possible forms, although here the repetition of all such combinations is avoided.

## Claims

1. Hot-transfer adhesive element for sealing and gluing fabrics or other materials produced by screen printing process, **characterized in that** it comprises:
a) flexible film (1) doped with a substance promoting the release of the hot-transfer adhesive element during the application process or the release of at least one object (4) during its application;
b) flexible and elastic adhesive layer (3) with a thickness ranging from 80 µm to 200 µm; and
c) carrier adhesive (5), which is a cold adhesive positioned in the edges of the film (1),
wherein the hot-transfer adhesive element further comprises at least one flexible paint layer (2) having a thickness ranging from 100 µm to 150 µm, on which the adhesive layer (3) is printed, and wherein said flexible paint layer (2) is hiding the adhesive layer (3) and containing the object (4).

2. Hot-transfer adhesive elements according to the previous claim, **wherein** the film (1) consists of paper, polyester or the like.

3. Hot-transfer adhesive elements according to any of the previous claims, **wherein** the adhesive of the adhesive layer (3) is flexible, elastic and thermoplastic.

4. Hot-transfer adhesive elements according to claim 1, **wherein** the paint element (4) and the paint layer (2) have various geometries and color combinations, preferably reflective and/or fluorescent.

5. Fabric sealing process using hot-transfer adhesive elements described in claims 1 to 4, **characterized by** the following steps:
a) aligning the hot-transfer adhesive element with the joining zone between two fabrics, through a carrier adhesive (5);
b) transferring the hot-transfer adhesive element to a joining surface of the fabrics using a hot-pressing process carried out at a temperature between 120°C and 180°C, a pressure between 2 bar to 6 bar (0.2 MPa to 0.6 Mpa), and during a time ranging from 8 s to 30 s;
c) releasing the film (1).

6. Fabric gluing process using hot-transfer adhesive elements described in claims 1 to 4, **characterized by** the following steps:
a) aligning the hot-transfer adhesive element with a first fabric, through the carrier adhesive (5);
b) transferring the hot-transfer adhesive element to a surface of the first fabric using a hot-pressing process carried out at a temperature between 120°C and 180 °C, a pressure between 2 bar to 6 bar (0.2 MPa to 0.6 Mpa), and during a time ranging from 8s to 30 s;
c) releasing the film (1);
d) application of a second fabric to be glued;
e) aligning the second fabric;
f) reapplying the hot press, with controlled temperature, pressure and time in order to bond the two fabrics.

7. Sealing and gluing processes according to claims 5 and 6, **wherein** the alignment step is performed manually or using machinery.

## Patentansprüche

1. Heißtransferklebstoff-Element für das Versiegeln und Kleben von Geweben oder anderen Materialien, die durch Siebdruckverfahren produziert werden, **dadurch gekennzeichnet, dass** es folgendes umfasst:
a) flexible Folie (1) mit einer Substanz gedopt, welche die Freigabe des Heißtransferklebstoff-Elements während des Anwendungsprozesses oder die Freigabe von mindestens einem Objekt (4) während dessen Anwendung fördert;
b) flexible und elastische Klebstoffschicht (3) mit einer Dicke von 80 µm bis 200 µm; und
c) Trägerklebstoff (5), welcher ein kalter Klebstoff ist, der an den Rändern der Folie (1) platziert ist,
worin das Heißtransferklebstoff-Element weiterhin mindestens eine flexible Farbschicht (2) mit einer Dicke von 100 µm bis 150 µm umfasst, auf welcher die Klebstoffschicht (3) gedruckt ist, und worin die besagte flexible Farbschicht (2) die Klebstoffschicht (3) versteckt und das Objekt (4) enthält.

2. Heißtransferklebstoff-Elemente nach vorherigem Anspruch, **worin** die Folie (1) aus Papier, Polyester oder Ähnlichem besteht.

3. Heißtransferklebstoff-Elemente nach jedem der vorherigen Ansprüche, **worin** der Klebstoff der Klebstoffschicht (3) flexibel, elastisch und thermoplastisch ist.

4. Heißtransferklebstoff-Elemente nach Anspruch 1, **worin** das Farbelement (4) und die Farbschicht (2) verschiedene Geometrien- und Farbkombinationen haben, vorzugsweise reflektierend und/oder fluoreszierend.

5. Gewebeversiegelungsprozess mit Verwendung von Heißtransferklebstoff-Elementen, wie in Ansprüche 1 bis 4 beschrieben, **gekennzeichnet durch** die folgenden Schritte:
a) Ausrichtung des Heißtransferklebstoff-Elements an der Fügezone zwischen zwei Geweben, mittels einem Trägerklebstoff (5);
b) Übertragung des Heißtransferklebstoff-Elements auf eine Fügefläche der Gewebe, indem ein Heißpressvorgang, der bei einer Temperatur von zwischen 120°C und 180 °C, bei einem Druckwert von zwischen 2 bar bis 6 bar (0,2 MPa bis 0,6 MPa), und während einer Zeitspanne von 8s bis 30s ausgeführt wird, genutzt wird;
c) Freigabe der Folie (1).

6. Gewebeklebeprozess mit Verwendung von Heißtransferklebstoff-Elementen, wie in Ansprüche 1 bis 4 beschrieben, **gekennzeichnet durch** die folgenden Schritte:
a) Ausrichtung des Heißtransferklebstoff-Elements an einen ersten Gewebe, mittels einem Trägerklebstoff (5);
b) Übertragung des Heißtransferklebstoff-Elements auf eine Fläche des ersten Gewebes, indem ein Heißpressvorgang, der bei einer Temperatur von zwischen 120 °C und 180 °C, bei einem Druckwert von zwischen 2 bar bis 6 bar (0,2 MPa bis 0,6 MPa), und während einer Zeitspanne von 8 s bis 30 s ausgeführt wird, genutzt wird;
c) Freigabe der Folie (1);
d) Anwendung eines zweiten Gewebes, das geklebt werden soll;
e) Ausrichtung des zweiten Gewebes;
f) Wiederanwendung der Heißpresse, bei kontrollierter Temperatur, Druck und Zeitspanne, um beide Gewebe zu verkleben.

7. Versiegelungs- und Klebeprozess nach Ansprüchen 5 und 6, **worin** der Ausrichtungsschritt manuell oder mittels Maschinen ausgeführt wird.

## Revendications

1. Élément de thermocollage pour le scellement et le collage de tissus ou d'autres matériaux produits par des procédés de sérigraphie, **caractérisé en ce qu'**il comprend :
a) un film flexible (1) dopé avec une substance qui favorise la libération de l'élément de thermocollage pendant le processus d'application ou la libération d'au moins un objet (4) pendant son application ;
b) une couche adhésive flexible et élastique (3) d'une épaisseur comprise entre 80 µm et 200 µm; et
c) un adhésif porteur (5), qui est un adhésif froid positionné sur les bords du film (1),
l'élément de thermocollage comprenant en outre au moins une couche de peinture flexible (2) d'une épaisseur comprise entre 100 µm et 150 µm, sur laquelle la couche adhésive (3) est imprimée, et ladite couche de peinture flexible (2) cachant la couche adhésive (3) et contenant l'objet (4).

2. Éléments de thermocollage selon la revendication précédente, où le film (1) est constitué de papier, de polyester ou d'un matériau équivalent.

3. Éléments de thermocollage selon l'une quelconque des revendications précédentes, où l'adhésif de la couche adhésive (3) est flexible, élastique et thermoplastique.

4. Éléments de thermocollage selon la revendication 1, où l'élément de peinture (4) et la couche de peinture (2) ont plusieurs géométries et combinaisons de couleurs, de préférence réflectives et/ou fluorescentes.

5. Procédé de scellement de tissus qui utilise des éléments de thermocollage décrits dans les revendications 1 à 4, **caractérisé par** les étapes suivantes :
a) alignement de l'élément de thermocollage avec la zone de jonction entre deux tissue, à travers un adhésif porteur (5) ;
b) transfert de l'élément de thermocollage à une surface de jonction des tissus au moyen d'un procédé de presse à chaud réalisé à une température comprise entre 120°C et 180 °C, une pression entre 2 bar et 6 bar (0,2 MPa et 0,6 MPa) et pendant une période de temps entre 8s et 30s ;
c) libération du film (1).

6. Procédé de collage de tissus qui utilise des éléments de thermocollage décrits dans les revendications 1 à 4, **caractérisé par** les étapes suivantes :
a) alignement de l'élément de thermocollage avec un premier tissu, à travers l'adhésif porteur (5) ;
b) transfert de l'élément de thermocollage à une surface du premier tissu au moyen d'un procédé de presse à chaud réalisé à une température comprise entre 120°C et 180 °C, une pression entre 2 bar et 6 bar (0,2 MPa et 0,6 MPa) et pendant une période de temps entre 8s et 30s ;
c) libération du film (1) ;
d) application d'un deuxième tissu à être collé ;
e) alignement du deuxième tissu ;
f) nouvelle application de la presse à chaud, á température, pression et temps contrôlés afin de lier les deux tissus.

7. Procédés de scellement et de collage selon les revendications 5 et 6, où l'étape d'alignement est réalisée manuellement ou par machine.
